Europäisches Patentamt

European Patent Office

Office européen des brevets

(11) Publication number: **0 312 399 B1**

# EUROPEAN PATENT SPECIFICATION

(45) Date of publication of patent specification: 30.09.92    (51) Int. Cl.⁵: **F41H 5/04**, B32B 18/00

(21) Application number: **88309679.4**

(22) Date of filing: **14.10.88**

(54) **Semi-rigid stratified shield.**

(30) Priority: **16.10.87 IT 2230187**

(43) Date of publication of application:
**19.04.89 Bulletin 89/16**

(45) Publication of the grant of the patent:
**30.09.92 Bulletin 92/40**

(84) Designated Contracting States:
**AT BE DE ES FR GB GR NL SE**

(56) References cited:
**EP-A- 0 041 271        EP-A- 0 241 641**
**DE-A- 1 952 759        US-A- 3 431 818**
**US-A- 3 516 898        US-A- 4 030 427**
**US-A- 4 061 815**

(73) Proprietor: **Tencara S.p.A.**
**Via XIII Giugno 8**
**Ravenna(IT)**

(72) Inventor: **Cappa, Arnaldo Carlo**
**15, via Lucinasco**
**I-22100 Montano Lucino (CO)(IT)**

(74) Representative: **Whalley, Kevin et al**
**MARKS & CLERK 57/60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a semi-rigid stratified shield, having improved impact-resistance and/or penetration resistance as well as inhibiting properties against thermal radiation.

More particularly, the invention is concerned with the realization of a flexible, stratified semi-rigid shield suitable for providing protection to the bodies of vehicles, to the hulls of aircraft and to generic structures or to critical parts thereof, either integrative or permanent, in various protective systems.

US 3 516 898 discloses a hard faced plastic armour plate laminate, comprising a facing layer of alumina ceramic, boron carbide ceramic or silicon carbide ceramic on a resin impregnated glass fabric base.

The shield according to the invention can be used, in particular, in the field of the so-called modern systems, for the protection of motor vehicles such as cars, delivery vans, logistical vehicles, mobile shelters and so on, or as fenders and as means for the protection against raising of dust and so on, because of its lightness and flexibility.

Such a shield leads to particularly good results, for instance low overall weight per single unit, flexibility and mobility, compared to the characteristics of the conventional equivalent protective shieldings.

There are known protective stratified materials, specifically materials structured as a laminate of plastic materials combined with fabrics (of glass, artificial fibres and so on). Nonetheless, in such material there often occur delamination phenomena, during their use, which considerably reduce their efficiency; in other words they prove to be not suitable, for instance, in the case of a low elastomeric module matrix, in those applications where a certain rigidity, a certain surface hardness and chemical and/or thermal resistance are required.

The present invention aims to provide a semi-rigid stratified shield, having improved impact and/or penetration resistance, which may overcome or at least mitigate the drawbacks of the prior art.

More particularly, the invention aims to provide a semi-rigid stratified shield suitable for protective systems for persons and/or critical mechanical operational parts in hulls (bodies) of mobile means, due to its adaptibility to structures requiring maximum protective efficiency, consistent with a reduction of the overall weight of the same.

The present invention provides a semi-rigid stratified shield consisting of a plurality of plate structures or layers, embedded in an elastomeric matrix, characterized in that the shield is pivotable at one of its sides. Each plate structure consists of a plurality of plate elements or plates, each made of a material selected from oxide-based ceramics and sintered material based on metal oxide and/or metals. The plate elements are contained in a tray-like frame and are adhesively coupled to a support in the form of a carrier, the carrier being made of a material selected from metal, metal alloys and composite materials consisting of alternate layers of a fabric and of an elastomeric material.

Thus there may be formed a semi-rigid stratified structure, with strong bonds between the different layers, combined with certain compliance in the direction normal to the layers. A stratified structure of this kind allows a proper distribution of the impact energy dispersing the same energy over a surface far wider than the impact surface itself; the absorption of the impact energy increases with the total surface of the successive layers, the bonds of which are perturbed, a consequential directional destabilization being exerted on the impacting body.

The stratified shield is preferably kept at a certain distance from the structure to be protected, said distance being proportional to the size of the impacting body, for instance at least twice its length.

In other words, in the semi-rigid stratified shield of the invention, there occur a sum of actions summarized as follows:
- reactivity of the structure to the impact, which develops a succession of elastic response waves, with a speed up to 4000-6000 m/s:
- conical distribution of the impact energy, dispersing the load on its structure and composition; the shield can even minimize the thermal radiation coming from the inside of the protected structure.

The plate elements of the plates may be arranged as a mosaic and contained in the tray-like frame, which may be made of a metal or its alloy, such as for instance aluminium, its alloys, different kinds of steel and so on, or of plastic materials such as polyethylene, polypropylene, polyvinylchloride and so on.

The tray, acting as an assembly frame for said plates, may moreover have a form and size as required by the type of the foreseen structure and location, taking into consideration the adaptability to the structure of the vehicle.

For illustration purposes, the new shield may be technically obtained in a substantially polygonal, preferably quadrangular, shape.

As far as the carrier is concerned, this latter is made of a material having the function of strengthening the plate or the mosaic of ceramic plates at the moment of the impact or in the case of breaking.

The carrier thus consists of materials suited for a mechanical action, developing a high resistance to the above mentioned stresses, such as for example metals or their alloys, or composite materials consisting of alternate layers of a fabric and of an elastomeric material.

A suitable material, based on alternate layers of a fabric and of an elastomeric or plastomeric material, is described in European Patent No. 49014.

The layers forming the shield may be coupled to each other by means of conventional adhesives (glues) interposed (spread) between the tray and the ceramic plate and between this latter and the carrier.

The ceramic layer or layers mentioned hereinabove may be embedded into an elastomeric matrix (natural rubber, synthetic rubbers etc.), according to the techniques of the prior art, and have a size and shape suitable for the desired shielding.

In order to obtain a better assembly of the shield's structural components, it is possible to embed structural reinforcing elements constituted by a metal net or by a synthetic material, films, polyester, acrylic or poly-olefinic nets, fibrilled films etc.

The thus obtained shield may be fitted with a suitable rigid suspension bar (of metal etc.) around which the shield itself may pivot, keeping the shield spaced apart from the structure to be protected at a distance which is preferably at least twice the length of the impacting body.

The shielding achieved by means of the shield of the invention, other performance factors being equal, allows weight savings of the order of 40-60% to be achieved, with respect to conventional metal protections or, at equal weight, it is possible to increase the protective power or capacity and, this latter factor remaining equal, it is possible to keep the weight on macroscopically reduced levels, with considerable advantages for the operational capacity of the protected mobile means.

The simplest manner for the installation of the shield of the invention is to fix the corresponding rigid suspension bar to the hull or to the structure of the mobile means by using bolts. There are, however, other possible systems such as for instance hinges etc, according to the techniques of the prior art.

The invention will be further described, by way of example only, with reference to the accompanying drawings, wherein:

Fig. 1 is a plan view of a shield according to the invention, showing the carrier partly cut away;

Fig. 2 is a cross-sectional view taken along line A-A in fig. 1;

Fig. 3 is a plan view of a carrier, with a plurality of layers according to fig. 1; and

Fig. 4 is a cross-sectional view of the shield taken along the line B-B in fig. 3.

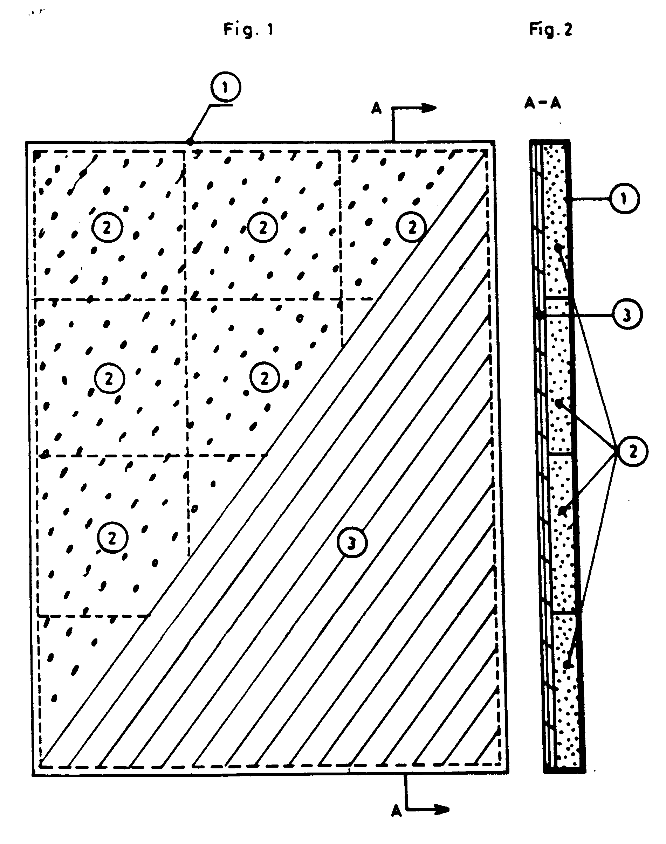

More specifically, Figs. 1 and 2 show an embedded layer consisting of a holding tray 1 containing 12 ceramic plates 2, whose shape is indicated by broken lines, and on which is superimposed a carrier 3, indicated in the drawing by the portion marked by diagonal lines (indicating the surface of structural layer).

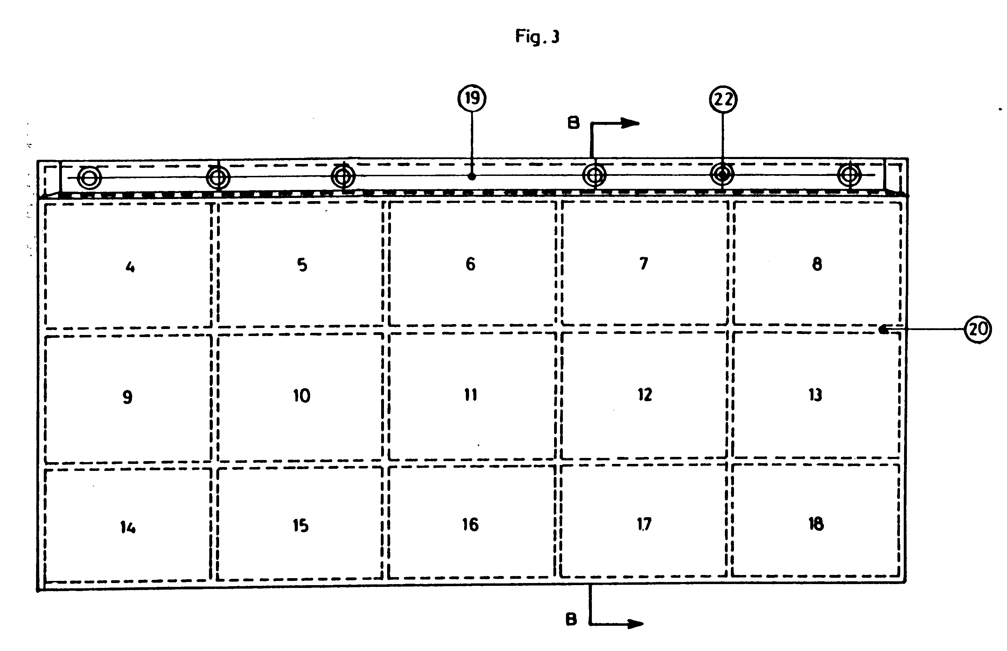

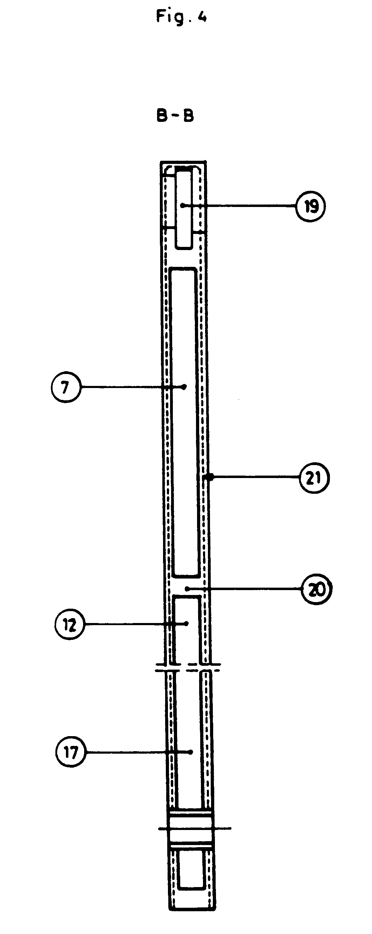

Figs. 3 and 4 show, as a practical form of embodiment of the invention, a complete shield, wherein reference numerals 4 to 18 indicate as many layers as according to fig. 1, while numeral 19 indicates a metal supporting shaft with bolts 22, around which the shield is free to pivot. Numeral 20 indicates the elastomeric layer containing a metal reinforcing net 21, into which matrix are embedded the ceramic layers 7, 12 and 17 (see figure 4).

## Claims

1. A semi-rigid stratified shield consisting of a plurality of plate structures (4 to 18) embedded in an elastomeric matrix (20), characterized in that the shield is pivotable at one of its sides, and that each plate structure (4 to 18) consists of a plurality of plate elements (2), each made of a material selected from oxide-based ceramics and sintered materials based on metal oxide and/or metals, the plate elements (2) being contained in a tray-like frame (1) and being adhesively coupled to a support in the form of a carrier (3), the carrier (3) being made of a material selected from metal, metal alloys and composite materials consisting of alternate layers of a fabric and of an elastomeric material.

2. A shield as claimed in Claim 1, characterized in that the plate elements (2) are adhesively coupled to the tray-like frame (1).

3. A shield as claimed in Claim 1 or 2, wherein the tray-like frame (1) comprises a metal selected from aluminium and its alloys, or from steels, or plastic material.

4. A shield as claimed in Claim 1, 2 or 3, characterized in that the plate structures (4 to 18) are embedded in an elastomeric matrix (20) selected from natural and synthetic rubbers.

5. A shield as claimed in claim 4, characterized in that said elastomeric matrix (20) also contains structural elements (21) selected from metal nets and from nets and films of a synthetic material selected from polyesters, polyolefines and polyacrylates.

6.  A shield as claimed in any of claims 1 to 5, characterized by having essentially a polygonal, preferably quadrangular, shape.

## Patentansprüche

1.  Halbstarrer Mehrschichtschutzschild, bestehend aus einer Vielzahl von Plattenstrukturen (4 bis 18), die in eine elastomere Matrix (20) eingebettet sind, dadurch gekennzeichnet, daß der Schild an einer seiner Seiten drehbar ist und daß jede Plattenstruktur (4 bis 18) aus einer Vielzahl von Plattenelementen (2) besteht, die jeweils aus einem Material hergestellt sind, das ausgewählt ist aus Keramikmaterialien auf Oxidbasis und gesinterten Materialien auf der Basis von Metalloxid und/oder Metallen, wobei die Plattenelemente (2) in einem schalenartigen Rahmen (1) enthalten sind und adhäsiv an eine Auflage in Form eines Trägers (3) gebunden sind, wobei der Träger (3) aus einem Material, ausgewählt aus Metall, Metallegierungen und Verbundmaterialien, die aus alternierenden Schichten eines Gewebes und eines elastomeren Materials bestehen, hergestellt ist.

2.  Schild nach Anspruch 1, dadurch gekennzeichnet, daß die Plattenelemente (2) adhäsiv an den schalenartigen Rahmen (1) gebunden sind.

3.  Schild nach Anspruch 1 oder 2, in welchem der schalenartige Rahmen (1) ein Metall, ausgewählt aus Aluminium und dessen Legierungen oder aus Stahlsorten, oder Kunststoffmaterialien, umfaßt.

4.  Schild nach Anspruch 1, 2 oder 3, dadurch gekennzeichnet, daß die Plattenstrukturen (4 bis 18) in einer elastomeren Matrix (20), ausgewählt aus natürlichen und synthetischen Kautschuken, eingebettet sind.

5.  Schild nach Anspruch 4, dadurch gekennzeichnet, daß die elastomere Matrix (20) ferner Strukturelemente (21), ausgewählt aus Metallnetzen und aus Netzen und Filmen eines synthetischen Materials, ausgewählt aus Polyestern, Polyolefinen und Polyacrylaten, enthält.

6.  Schild nach irgendeinem der Ansprüche 1 bis 5, dadurch gekennzeichnet, daß er eine im wesentlichen polygonale, vorzugsweise viereckige Form, hat.

## Revendications

1.  Un écran protecteur stratifié semi-rigide constitué d'une pluralité de structures en plaque (4 à 18) noyées dans une matrice élastomère (20), caractérisé en ce que l'écran protecteur est monté à pivotement sur un de ses côtés, et que chaque structure de plaque (4 à 18) est constituée d'une pluralité d'éléments en plaques (2), chacun étant réalisé en un matériau choisi parmi les composés céramiques à base d'oxydes et les matériaux frittés à base d'oxydes métalliques et/ou de métaux, les éléments en plaque (2) étant disposés dans un bâti en forme de plateau (1) et étant fixés par adhésion à un support sous la forme d'une structure portante (3), la structure portante (3) étant réalisée en un matériau choisi parmi les métaux, les alliages métalliques et les matériaux composites constitués de couches alternées d'un tissu et d'un matériau élastomère.

2.  Un écran protecteur tel que revendiqué dans la revendication 1, caractérisé en ce que les éléments en plaque (2) sont fixés par adhésion au bâti en forme de plateau (1).

3.  Un écran protecteur tel que revendiqué dans la revendication 1 ou 2, dans lequel le bâti en forme de plateau (1) est constitué d'un métal choisi parmi l'aluminium et ses alliages ou parmi les aciers ou bien parmi les matières plastiques.

4.  Un écran protecteur tel que revendiqué dans la revendication 1, 2 ou 3, caractérisé en ce que les structures en plaque (4 à 18) sont noyées dans une matrice élastomère (20) choisie parmi les caoutchoucs naturels et synthétiques.

5.  Un écran protecteur tel que revendiqué dans la revendication 4, caractérisé en ce que ladite matrice élastomère (20) renferme également des éléments structurels (21) choisis parmi les treillis métalliques et parmi les treillis et les pellicules en une matière synthétique choisie parmi les polyesters, les polyoléfines et les polyacrylates.

6.  Un écran protecteur tel que revendiqué dans l'une quelconque des revendications 1 à 5, caractérisé en ce qu'il présente une forme sensiblement polygonale, de préférence quadrangulaire.

Fig. 1

Fig. 2

A — A

Fig. 3

EP 0 312 399 B1

Fig. 4

B - B